# EUROPÄISCHE PATENTSCHRIFT

(11) **EP 0 599 080 B1**
(45) Veröffentlichungstag und Bekanntmachung des Hinweises auf die Patenterteilung: **26.03.1997**
(21) Anmeldenummer: 93117542.6
(22) Anmeldetag: 29.10.1993
(51) Int. Cl.: F16K 1/30, F17C 13/04

(54) **Restdruckventil**
Residual pressure valve
Soupape de pression résiduelle

(30) Priorität: 26.11.1992 DE 4239717
(43) Veröffentlichungstag der Anmeldung: 01.06.1994
(73) Patentinhaber: KM-SCHMÖLE GmbH, D-58687 Menden (DE)
(72) Erfinder: Dirksmeier, Ulrich, D-58706 Menden (DE); Huckschlag, Norbert, D-58708 Menden (DE)
(74) Vertreter: Bockermann, Rolf, Dipl.-Ing.

(56) Entgegenhaltungen:
- DD-A- 76 816
- DE-A- 2 131 805
- DE-A- 2 300 240
- DE-C- 2 920 882
- GB-A- 659 079
- US-A- 3 441 050
- US-A- 3 729 019

## Beschreibung

Die Erfindung betrifft ein Restdruckventil für ein einem Druckgasbehälter zuzuordnendes Gasflaschenventil gemäß den Merkmalen im Oberbegriff des Patentanspruchs 1.

Ein derartiges Restdruckventil zählt durch die DE-A-2 300 240 zum Stand der Technik.

Aus diesem Dokument ist eine Ventilanordnung für einen Druckgasbehälter bekannt, die dessen Entleerung auf einen Druck unterhalb des Restdrucks verhindert sowie dessen Füllung zuläßt. Diese Ventilanordnung umfaßt einen Dichtkörper, der an einem Dichtkörperträger in einem Kanal des Ventilgehäuses festgelegt ist und gegen einen federnd abgestützten Dichtsitz unter dem Einfluß einer Druckfeder andrückbar ist. Der Dichtsitz ist Bestandteil eines Dichtsitzträgers. Der Dichtkörper ist in den Dichtkörperträger in dessen dem Dichtsitz zugewandter Stirnseite zentral eingebettet, wobei sich der ringförmige Dichtsitzträger des Dichtkörperträgers befindet. Zum Befüllen des Druckgasbehälters sind der Dichtkörperträger und der Dichtsitzträger abschnittsweise gemeinsam axial verlagerbar. Die Verlagerung wird durch einen vorstehenden Sprengring begrenzt, der sich in einer Nut als Anschlag für den Dichtkörperträger befindet.

Die vorstehend beschriebene Bauart benötigt eine Reihe von Einzelbauteilen, die alle genau aufeinander abgestimmt sein müssen.

Auch aus der DE-C-2 920 882 ist ein ähnliches Restdruckventil bekannt. Der mehrfach abgestufte Querkanal ist in einem seitlichen Stutzen des Ventilgehäuses vorgesehen und durch mehrere zur Achse des Querkanals außermittig verlaufende Bohrungen mit einem das Gasflaschenventil in Längsrichtung durchsetzenden und durch einen Ventilkörper schließbaren Gaskanal verbunden.

Der Dichtsitzträger ist hülsenartig gestaltet und über einen umfangsseitigen Dichtring in einem Längenabschnitt des Querkanals axial dicht geführt. Seine Axialbewegung wird einerseits durch eine Abstufung des Querkanals und andererseits durch einen Schlitzring begrenzt, der in eine umfangsseitige Ringnute in der Wand des Längenabschnitts eingebettet ist. Da die Ringnute breiter als die Dicke des Schlitzrings bemessen ist, kann der Schlitzring parallel zu sich selber in der Ringnute verlagert werden.

An dem dem Schlitzring abgewandten Ende weist der längskanalisierte Dichtsitzträger eine ringförmige Ausnehmung auf, in die eine Schraubendruckfeder eingreift. Diese stützt sich einerseits am Boden der Ausnehmung und andererseits an einer weiteren Abstufung des Querkanals ab. Durch die Schraubendruckfeder wird der Dichtsitzträger ständig in Richtung auf den Schlitzring belastet.

Die kreisringförmige Ausnehmung zur Aufnahme der Schraubendruckfeder ist über Querschlitze mit dem inneren Längskanal verbunden.

Der Dichtsitzträger dient der axialen Führung des stößelartig ausgebildeten Dichtkörperträgers. Die Führung des Dichtkörperträgers erfolgt hauptsächlich im Längenabschnitt der kreisringförmigen Ausnehmung für die Schraubendruckfeder.

An dem dem Schlitzring zugewandten Ende besitzt der Dichtkörperträger einen scheibenartig ausgebildeten Kopf. Die Unterseite des Kopfes ist mit einer Ringnut versehen, in die ein im Querschnitt kreisringförmiger Dichtring eingebettet ist. Dieser Dichtring wirkt mit einer Dichtkante zusammen, die als Dichtsitz an einem radial nach innen vorspringenden Kragen des Dichtsitzträgers ausgebildet ist.

An dem dem scheibenförmigen Kopf des Dichtkörperträgers abgewandten Ende ist in einer entsprechend gestalteten Ringnut eine Schlitzscheibe festgelegt, welche eine Abstützung für eine weitere Schraubendruckfeder bildet, die sich andererseits am Boden der kreisringförmigen Ausnehmung im Dichtsitzträger abstützt. Hierdurch wird der Dichtkörper permanent in Richtung auf den Dichtsitz belastet.

Ein Nachteil dieser Bauart ist der Sachverhalt, daß der Dichtsitzträger und der Dichtkörperträger genau aufeinander abgestimmt sein müssen, weil der Dichtkörperträger im Dichtsitzträger axial zwangsgeführt ist. Auch der Längenabschnitt des Querkanals, in welchem der Dichtsitzträger zwangsgeführt ist, muß exakt auf den Dichtsitzträger abgestimmt sein. Diese Anforderungen sind folglich mit einem hohen Fertigungsaufwand verbunden, da der Dichtkörperträger, der Dichtsitzträger und der Querkanal sowie die Stichbohrungen im Stutzen unabhängig voneinander auf in der Regel verschiedenen Maschinen hergestellt werden.

Nachteilig ist ferner die Herstellung des kompliziert gestalteten Dichtsitzträgers im Hinblick auf die kreisringförmige Ausnehmung für die beiden Schraubendruckfedern sowie die Querschlitze zwischen dem Längskanal zur Führung des Dichtkorperträgers und der kreisringförmigen Ausnehmung.

Darüberhinaus ist die den Schlitzring aufnehmende Ringnut von Nachteil. Unabhängig davon, ob der Schlitzring durch einen Fülladapter, durch den Dichtsitzträger oder durch das Druckgas selber in der Ringnut verlagert wird, besteht immer die Gefahr, daß bei dieser Verlagerung parallel zu sich selber der Schlitzring sich verkanten kann, so daß dann die Funktion des Restdruckventils aufgehoben wird.

Auch die außermittigen Stichbohrungen zwischen dem Querkanal und dem zentralen Gaskanal im Gasflaschenventil sind nur mit einem besonderen Aufwand herzustellen.

Im bekannten Fall ist es desweiteren von Nachteil, daß der ringförmige Dichtkörper unmittelbar dem Einfluß des Druckgases ausgesetzt ist. Neben dem Sachverhalt, daß er in nachteiliger Weise an einem kantigen Dichtsitz zur Anlage kommt und dadurch erhöhten Verschleißbeanspruchungen ausgesetzt ist, können z.B. Verwirbelungen im Druckgas den Dichtkörper leicht aus der ihn halternden Nute hinausdrücken.

Nachteilig ist ebenfalls, daß bei Einsatz eines Fülladapters die Durchtrittsbereiche zwischen der Wandung der Bohrung im Fülladapter und dem Außenumfang des Kopfes des Dichtkörperträgers sehr klein werden und damit ein unzureichender trittsquerschnitt vorhanden ist.

Schließlich ist durch die Ineinanderschachtelung der diversen Bauteile des Restdruckventils ein nicht unerheblicher Aufwand bei der Montage erforderlich, welche außerdem nur von Fachkräften mit entsprechender Ausbildung unter größter Sorgfalt durchgeführt werden kann.

Der Erfindung liegt ausgehend von den im Oberbegriff des Patentanspruchs 1 beschriebenen Merkmalen die Aufgabe zugrunde, ein Restdruckventil zu schaffen, das einfach aufgebaut und leicht zu montieren ist sowie große Durchtrittsquerschnitte für das Druckgas in allen Betriebssituationen aufweist.

Die Lösung dieser Aufgabe besteht nach der Erfindung in den im kennzeichnenden Teil des Patentanspruchs 1 aufgeführten Merkmalen.

Hierbei springt zunächst als Vorteil ins Auge, daß alle beweglichen Teile des Restdruckventils, wie insbesondere der Dichtsitzträger, der Dichtkörperträger und die Distanzhülse, axial hintereinander angeordnet sind. Dies erlaubt eine problemlose Fertigung mit vergleichsweise großen Toleranzen, ohne daß eine besondere Rücksicht auf die Zuordnung der einzelnen Bauteile genommen zu werden braucht. Auch sind alle Bauteile als normale Drehkörper ausgebildet, an denen lediglich in Bezug auf den Dichtkörperträger und die Distanzhülse einfache Fräsoperationen zur Herstellung der Führungsstege einerseits sowie der Distanzfinger andererseits ausgeführt werden müssen.

Ein weiterer Vorteil wird im Rahmen der Erfindung darin gesehen, daß der stirnseitig in den Dichtkörperträger eingebettete Dichtkörper mit dem Dichtsitz am ringförmigen Dichtsitzträger flächig zusammenwirken kann. Hierdurch ist insbesondere der Dichtkörper wenig verschleißanfällig. Er besitzt eine lange Standzeit.

Aufgrund des weiteren Sachverhalts, daß sich der Dichtkörperträger über die Führungsstege in dem Stegabschnitt des Querkanals abstützt und die Bestandteil der Distanzhülse bildenden Distanzfinger mit großem radialen Abstand zu der Wand des Stegabschnitts angeordnet sind, werden umfangsseitig des Dichtkörperträgers große Durchtrittsquerschnitte geschaffen, und zwar unabhängig davon, ob der Druckgasbehälter gefüllt (Öffnen des Restdruckventils durch das Druckgas oder einen Fülladapter) oder entleert wird.

Darüberhinaus ist ein Vorteil der Erfindung die durch die axiale Hintereinanderanordnung der verschiedenen Bauteile leichte Montierbarkeit, die sich auch in einer einfachen Wartung niederschlägt.

In der Schließstellung des Restdruckventils wird durch die Federbemessung unter Berücksichtigung des gewünschten Restdrucks von z.B. 2,5 bar bis 3 bar sowohl der Dichtkörperträger in Richtung auf den Dichtsitzträger als auch der Dichtsitzträger in Richtung auf den Dichtkörperträger belastet. Hierbei liegt die Distanzhülse am Boden des Querkanals an. Ferner ist der Dichtkörper an den Dichtsitz gedrückt, während der Dichtkörperträger gewissermaßen schwimmend im Stegabschnitt des Querkanals liegt, ohne an die Stirnseiten des Stegabschnitts zu stoßen.

Soll der Druckgasbehälter entleert werden, so gelangt das Druckgas nach dem Öffnen des Gasflaschenventils über den Querkanal und durch den Dichtsitzträger auf die Stirnseite des Dichtkörperträgers und verlagert diesen zusammen mit dem Dichtkörper gegen die Rückstellkraft der auf den Dichtkörperträger wirkenden Schraubendruckfeder bis zum Anschlag des Dichtkörperträgers an der dem Boden des Querkanals zugewandten Stirnseite des Stegabschnitts. Das Druckgas kann dann am Dichtsitz vorbei und umfangsseitig der Distanzfinger in die Distanzhülse übertreten und von hier aus über die bodenseitigen Perforationen der Distanzhülse sowie die Durchbrechung im Boden des Querkanals abströmen.

Sinkt beim Entleeren der Druck im Druckgasbehälter bis auf die Restdruckhöhe von z.B. 2,5 bar bis 3 bar, bewirken die auf den Dichtkörperträger einerseits und den Dichtsitzträger andererseits lastenden und auf die jeweils gewünschte Restdruckhöhe abgestimmten Schraubendruckfedern, daß der Dichtkörperträger in die Stellung zurückkehrt, in welcher der Dichtkörper dichtend am Dichtsitz anliegt und der Dichtkörperträger eine schwimmende Position im Stegabschnitt des Querkanals einnimmt.

Beim Befüllen des Druckgasbehälters wird die Distanzhülse zusammen mit dem Dichtkörperträger entweder nur durch den Fülldruck des Druckgases oder auch durch einen entsprechenden Fülladapter in Richtung auf den Dichtsitzträger verschoben, bis daß der Dichtkörperträger an der dichtsitzseitigen Stirnseite des Stegabschnitts des Querkanals zur Anlage kommt. Da aber sowohl der Stegabschnitt als auch die Distanzfinger der Distanzhülse länger sind als die Führungsstege des Dichtkörperabschnitts, wird auch der Dichtsitzträger gegen die Rückstellkraft der auf ihm lastenden Schraubendruckfeder noch geringfügig verlagert, so daß das Druckgas aus der Distanzhülse über die Durchtrittsbereiche umfangsseitig der Distanzfinger sowie am Dichtsitz vorbei in den Querkanal in Richtung auf den Druckgasbehälter gelangen kann.

Ist der Druckgasbehälter gefüllt und das Gasflaschenventil geschlossen, stellen sich aufgrund der Federabmessungen in Relation zum Restdruck die Bauteile wieder in der Mittelstellung (Schließstellung) ein.

Eine besonders vorteilhafte Ausführungsform der Erfindung besteht in den Merkmalen des Patentanspruchs 2. Neben der leichten Austauschbarkeit und der sicheren Einfassung des Dichtkörpers wird hiermit der Vorteil erzielt, daß auch kleine Serien in wirtschaftlicher Weise gefertigt werden können.

Die Merkmale des Patentanspruchs 3 haben den Zweck, daß speziell in der Schließstellung des Restdruckventils der Dichtkörper und der Dichtsitz einwandfrei aneinandergedrückt sind, ohne daß die Führungsstege des Dichtkörperträgers im Stegabschnitt des Querkanals stirnseitig anschlagen können.

Durch die kreisringförmige Ausbildung des Dichtsitzes entsprechend Patentanspruch 4 erhält der Dichtsitzträger konzentrisch zum Dichtsitz einen kreisringförmigen Vorsprung, der einwandfrei mit den Distanzfingern der Distanzhülse in Kontakt gelangen kann.

Gemäß Patentanspruch 5 ist der Dichtsitzträger durch ein Tellerfederpaket in Richtung auf den Dichtkörperträger belastet. Hiermit ist der Vorteil verbunden, daß auf vergleichsweise kurzer axialer Baulänge eine große Federkraft erzeugt werden kann. Mithin braucht nur ein relativ kurzer Dichtsitzabschnitt im Querkanal für die Aufnahme des Dichtsitzträgers und des Tellerfederpakets vorgesehen zu werden.

Desweiteren ist durch dieses Tellerfederpaket bei Verwendung eines Fülladapters gesichert, und zwar durch geeignete Bemessung der Rückstellkraft des Tellerfederpakets, daß nur bei Verwendung des speziellen Fülladapters diese Rückstellkraft überwunden werden kann. Unzulässigen Manipulationen am Restdruckventil sind dadurch der Boden entzogen.

Ein weiteres vorteilhaftes Merkmal der Erfindung besteht im Patentanspruch 6. Auf diese Art und Weise können die Distanzhülse und das Druckstück getrennt voneinander gefertigt werden. Die Materialbereitstellung wird vereinfacht und auch der Materialabtrag wird verringert.

Die Zentrierungen am Dichtkörperträger und am Boden der Distanzhülse entsprechend Patentanspruch 7 vermitteln der auf dem Dichtkörperträger lastenden Schraubendruckfeder eine einwandfreie Positionierung in der Distanzhülse.

Schließlich ist es im Rahmen der Erfindung noch von besonderem Vorteil, wenn gemäß Patentanspruch 8 der Dichtkörperträger und die Distanzhülse in eine Ventilpatrone integriert sind. Auf diese Weise kann das eigentliche Ventilgehäuse ohne weiteres auf einem Automaten gefertigt werden, ohne daß auf die diversen Bauteile des Restdruckventils Rücksicht genommen zu werden braucht. Der Stegabschnitt und der Hülsenabschnitt des Querkanals sind dann in der Ventilpatrone ausgebildet, wohingegen nur der Dichtsitzabschnitt des Querkanals unmittelbar im Ventilgehäuse ausgeformt ist.

Die Erfindung ist nachfolgend anhand eines in den Zeichnungen dargestellten Ausführungsbeispiels näher erläutert. Es zeigen:
- Figur 1: in der Ansicht, teilweise im Schnitt, ein Gasflaschenventil mit einem Restdruckventil;
- Figur 2: in vergrößerter Darstellung das Restdruckventil der Figur 1;
- Figur 3: einen vertikalen Querschnitt durch die Figur 2 entlang der Linie III-III sowie
- Figuren 4 und 5: das Restdruckventil der Figuren 1 und 2 in zwei weiteren Betriebsstellungen.

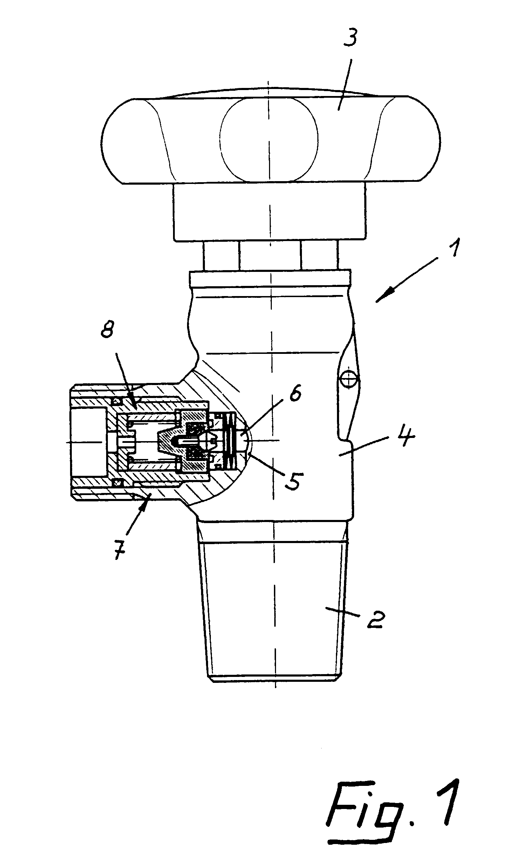

Mit 1 ist in der Figur 1 ein Gasflaschenventil bezeichnet, das einem nicht näher dargestellten Druckgasbehälter zugeordnet werden kann. Dazu wird das Gasflaschenventil 1 mit einem konischen Gewindeabschnitt 2 in eine entsprechende Gewindebohrung des Druckgasbehälters dicht eingeschraubt. Durch Drehen eines Handrads 3 wird mittels eines nicht näher veranschaulichten Schließkörpers ein im Ventilgehäuse 4 vorgesehener Gaskanal 5 mit einem Querkanal 6 in einem seitlichen Stutzen 7 verbunden oder es werden diese beiden Kanäle 5 und 6 voneinander getrennt.

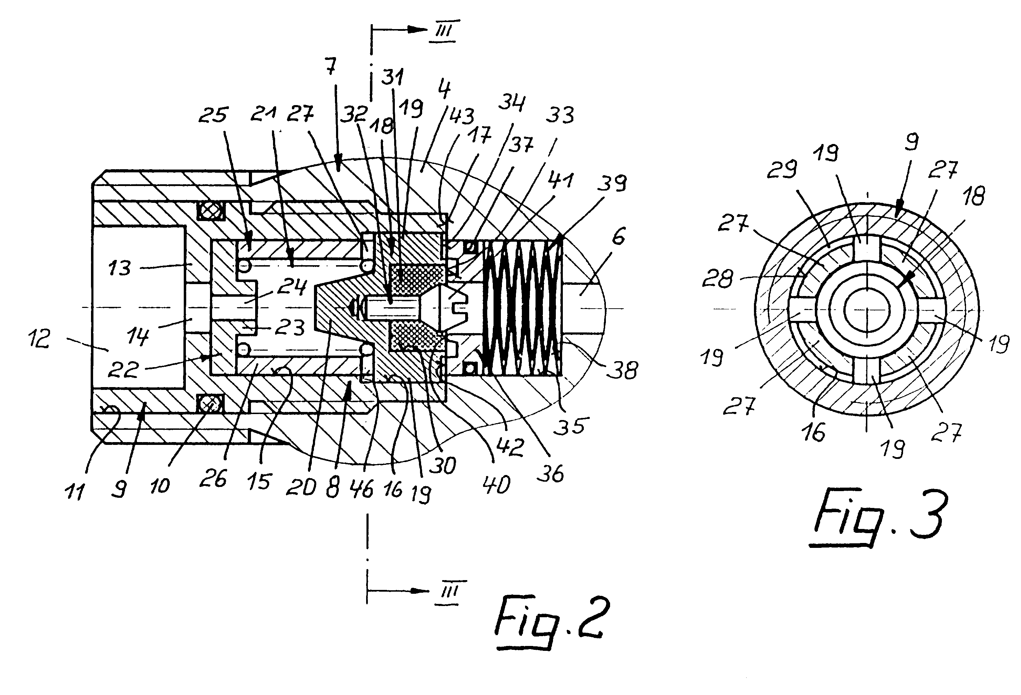

Um einen Restdruck im Druckgasbehälter von beispielsweise 2,5 bar aufrechtzuerhalten, ist in den Querkanal 6 des Stutzens 7 ein Restdruckventil 8 eingegliedert. Eine genauere Beschreibung des Restdruckventils 8 erfolgt nachstehend anhand der Figuren 2 und 3.

In den mehrfach gestuften Querkanal 6 ist eine Ventilpatrone 9 eingeschraubt und mit Hilfe eines Dichtrings 10 gegenüber einem zylindrischen Längenabschnitt 11 des Querkanals 6 abgedichtet. Die Ventilpatrone 9 weist an einem Ende einen Hohlraum 12 auf, in den beispielsweise ein nicht näher dargestellter Fülladapter eingesetzt werden kann. Der Boden 13 des Hohlraums 12 besitzt mittig eine Durchbrechung 14. Auf der anderen Seite des Bodens 13 ist in der Ventilpatrone 9 ein zylindrischer Hülsenabschnitt 15 des Querkanals 6 ausgebildet. An diesen Hülsenabschnitt 15 schließt sich ein im Durchmesser etwas größerer Stegabschnitt 16 kreisförmigen Querschnitts an. Dieser Stegabschnitt 16 mündet in die Stirnseite 17 der Ventilpatrone 9.

In dem Stegabschnitt 16 ist ein Dichtkörperträger 18 über vier radial abstehende Führungsstege 19 gleitend geführt. Die Führungsstege 19 sind um 90° zueinander versetzt angeordnet. Auf der dem Hohlraum 12 zugewandten Seite ist der Dichtkörperträger 18 mit einer konischen Zentrierung 20 für eine Schraubendruckfeder 21 versehen. Diese Schraubendruckfeder 21 stützt sich andererseits an einem Druckstück 22 ab, das scheibenförmig gestaltet und mit einer zapfenartigen zylindrische Zentrierung 23 für die Schraubendruckfeder 21 versehen ist. Das Druckstück 22 wird von einer Bohrung 24 axial durchsetzt. Es kann in dem Hülsenabschnitt 15 begrenzt axial verlagert werden.

Umfangsseitig der Schraubendruckfeder 21 ist in den Hülsenabschnitt 15 eine Distanzhülse 25 gleitfähig eingesetzt. Die Distanzhülse 25 besitzt einen zylindrischen Längenabschnitt 26, dessen Länge zuzüglich der Dicke des Druckstücks 22 der Länge des Hülsenabschnitts 15 entspricht.

An den zylindrischen Längenabschnitt 26 schließen sich vier schalenförmig gekrümmte Distanzfinger 27 an, welche sich umfangsseitig des Dichtkörperträgers 18 zwischen den Führungsstegen 19 erstrecken. Die Dicke der Distanzfinger 27 entspricht der Dicke der Wand der Distanzhülse 25, so daß aufgrund des im Durchmesser größeren Stegabschnitts 16 zwischen den Außenoberflächen 28 der Distanzfinger 27 und dem Stegabschnitt 16 große Durchtrittsspalte 29 gebildet werden.

Ferner ist aus der Figur 2 zu sehen, daß die Länge der Führungsstege 19 kürzer als die Länge des Stegabschnitts 16 bemessen ist.

Im Dichtkörperträger 18 ist eine stirnseitige Vertiefung 30 vorgesehen, die einen elastischen Dichtkörper 31 aufnimmt. Der Dichtkörper 31 ist durch eine Schraube 32 im Dichtkörperträger 18 auswechselbar befestigt. Es ist zu sehen, daß die Stirnfläche 33 des Dichtkörpers 31 gegenüber den benachbarten Stirnflächen 34 der Führungsstege 19 axial vorsteht.

In einen Dichtsitzabschnitt 35 des Querkanals 6 im Ventilgehäuse 4, dessen Durchmesser dem Durchmesser des Hülsenabschnitts 15 entspricht, ist ein ringförmiger Dichtsitzträger 36 axial verschieblich eingegliedert. Der Dichtsitzträger 36 besitzt umfangsseitig einen Dichtring 37, welcher an der Wand des Dichtsitzabschnitts 35 zur Anlage kommt.

Zwischen dem Dichtsitzträger 36 und dem Boden 38 des Dichtsitzabschnitts 35 erstreckt sich ein Tellerfederpaket 39.

Auf der dem Dichtkörperträger 18 zugewandten Seite besitzt der Dichtsitzträger 36 einen kreisringförmigen Dichtsitz 40, welcher am Dichtkörper 31 umfangsseitig des Schraubenkopfes 41 zur Anlage kommen kann. Durch den kreisringförmigen Dichtsitz 40 wird umfangsseitig ein kurzer kreisringförmiger Vorsprung 42 gebildet, der mit den Stirnflächen 34 der Distanzfinger 19 ständig in Kontakt steht.

In den Figuren 1 und 2 ist das Restdruckventil 8 in der "Schließstellung" gezeichnet. In dieser "Schließstellung" liegt weder im Hohlraum 12 noch im Querkanal 6 Druck an. Aufgrund entsprechender Federbemessung im Hinblick auf den gewünschten Restdruck von 2,5 bar wird der Dichtsitz 40 durch das Tellerfederpaket 39 so an den Dichtkörper 31 gedrückt und andererseits der Dichtkörperträger 18 durch die Schraubendruckfeder 21 so im Stegabschnitt 16 schwimmend gehalten, daß das Restdruckventil 8 zwar geschlossen ist, der Dichtkörperträger 18 jedoch nicht am kreisringförmigen Vorsprung 42 des Dichtsitzträgers 36 noch am umfangsseitigen Absatz 43 des Ventilgehäuses 4 noch an der anderen Stirnseite 46 des Stegabschnitts 16 anliegt.

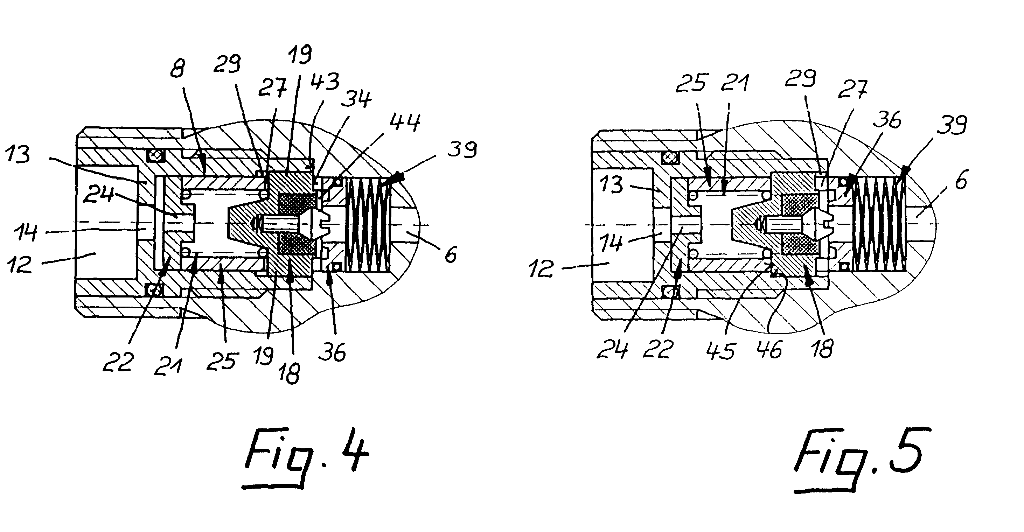

Soll der Druckgasbehälter gefüllt werden, beispielsweise nur über den Fülldruck des Druckgases, so wird durch diesen Fülldruck das Druckstück 22 zusammen mit der Distanzhülse 25, dem Dichtkörperträger 18 und dem Dichtsitzträger 36 gegen die Rückstellkraft der Schraubendruckfeder 21 und des Tellerfederpakets 39 in Richtung auf den Gaskanal 5 im Gasflaschenventil 1 verlagert (Figur 4). Diese Verlagerung erfolgt so lange, bis die Stirnflächen 34 der Führungsstege 19 an dem Absatz 43 des Querkanals 6 zur Anlage gelangen.

In dieser "Füllstellung" des Restdruckventils 8 kann nunmehr das Druckgas über den Hohlraum 12, die Durchbrechung 14 im Boden 13, die Bohrung 24 im Druckstück 22, die Distanzhülse 25, die Durchtrittsspalte 29 umfangsseitig der Distanzfinger 27 sowie den Spalt 44 zwischen Dichtkörperträger 18 und Dichtsitzträger 36 in den Querkanal 6 und von dort bei geöffnetem Gasflaschenventil 1 in den Druckgasbehälter gelangen.

Ist der Füllvorgang abgeschlossen, kehren die Bauteile 22, 25, 18 und 36 aufgrund der Federbemessungen wieder in die in Figur 2 dargestellte "Schließstellung" zurück.

Beim Entleeren des Druckgasbehälters wird nach dem Öffnen des Gasflaschenventils 1 aufgrund des dann im Querkanal 6 anstehenden Gasdrucks der Dichtkörperträger 18 so weit in Richtung auf den Hohlraum 12 verschoben, bis daß die Stirnseiten 45 der Führungsstege 19 an der Stirnseite 46 des Stegabschnitts 16 zur Anlage gelangen ("Entleerstellung" Figur 5). Aufgrund dessen steht ein sehr großer Durchflußquerschnitt zwischen den einander zugewandten Stirnseiten des Dichtkörperträgers 18 und des Dichtsitzträgers 36 sowie den Durchtrittsspalten 29 umfangsseitig der Distanzfinger 27 zur Verfügung, so daß das Druckgas dann anschließend über die Distanzhülse 25, die Bohrung 24 im Druckstück 22, die Durchbrechung 14 im Boden 23 und den Hohlraum 12 dem Verbraucher zugeführt werden kann.

Wird beim Entleeren der Restdruck von 2,5 bar erreicht, sorgen die Bemessungen der Schraubendruckfeder 21 und des Tellerfederpakets 39 dafür, daß die Bauteile 22, 25, 18 und 36 wieder in die in Figur 2 dargestellte "Schließstellung" zurückkehren.

### Bezugszeichenaufstellung

- 1 -: Gasflaschenventil
- 2 -: Gewindeabschnitt
- 3 -: Handrad
- 4 -: Ventilgehäuse
- 5 -: Gaskanal
- 6 -: Querkanal
- 7 -: Stutzen
- 8 -: Restdruckventil
- 9 -: Ventilpatrone
- 10 -: Dichtring
- 11 -: zylindrischer Längenabschnitt v. 6
- 12 -: Hohlraum
- 13 -: Boden v. 12
- 14 -: Durchbrechung in 13
- 15 -: Hülsenabschnitt v. 6
- 16 -: Stegabschnitt v. 6
- 17 -: Stirnseite v. 9
- 18 -: Dichtkörperträger
- 19 -: Führungsstege
- 20 -: Zentrierung an 18
- 21 -: Schraubendruckfeder
- 22 -: Druckstück
- 23 -: Zentrierung an 22
- 24 -: Bohrung in 22
- 25 -: Distanzhülse
- 26 -: zylindrischer Längenabschnitt v. 25
- 27 -: Distanzfinger
- 28 -: Außenoberfläche v. 27
- 29 -: Durchtrittsspalte
- 30 -: Vertiefung in 18
- 31 -: Dichtkörper
- 32 -: Schraube
- 33 -: Dichtfläche v. 31
- 34 -: Stirnseiten v. 19
- 35 -: Dichtsitzabschnitt v. 6
- 36 -: Dichtsitzträger
- 37 -: Dichtung
- 38 -: Boden v. 35
- 39 -: Tellerfederpaket
- 40 -: Dichtsitz
- 41 -: Schraubenkopf
- 42 -: Vorsprung
- 43 -: Absatz
- 44 -: Spalt
- 45 -: Stirnseiten v. 19
- 46 -: Stirnseite v. 16

## Patentansprüche

1. Restdruckventil für ein einem Druckgasbehälter zuzuordnendes Gasflaschenventil (1), welches in einem Querkanal (6) des Ventilgehäuses (4) einen an einem Dichtkörperträger (18) festgelegten, unter dem Einfluß einer Druckfeder (21) gegen einen federnd abgestützten Dichtsitz (40) als Bestandteil eines Dichtsitzträgers (36) andrückbaren Dichtkörper (31) aufweist, welcher in die dem Dichtsitz (40) zugewandte Stirnseite des Dichtkörperträgers (18) zentral eingebettet ist und sich der ringförmige Dichtsitzträger (36) stirnseitig des Dichtkörperträgers (18) befindet, wobei der Dichtkörperträger (18) und der Dichtsitzträger (36) mindestens zum Befüllen des Druckgasbehälters in dem Querkanal (6) abschnittsweise gemeinsam axial verlagerbar sind, **dadurch gekennzeichnet**, daß der Dichtkörperträger (18) am Umfang mit mehreren längsgerichteten, in einem Stegabschnitt (16) des Querkanals (6) gleitenden Führungsstegen (19) versehen ist, wobei der Dichtsitzträger (36) über sich zwischen den Führungsstegen (19) umfangsseitig des Dichtkörperträgers (18) erstreckende und mit radialem Abstand zur Wand des Stegabschnitts (16) angeordnete Distanzfinger (27) sich an einer die Druckfeder (21) umschließenden topfförmigen, bodenseitig perforierten Distanzhülse (25) abstützt, die zwischen den Dichtkörperträger (18) und den mit einer Durchbrechung (4) versehenen Boden (13) eines Hülsenabschnitts (15) des Querkanals (6) axial gleitfähig integriert ist.

2. Restdruckventil nach Patentanspruch 1, **dadurch gekennzeichnet**, daß der Dichtkörper (31) lösbar, insbesondere mittels einer Schraube (32), in einer stirnseitigen Vertiefung (30) des Dichtkörperträgers (18) festgelegt ist.

3. Restdruckventil nach Patentanspruch 1 oder 2, **dadurch gekennzeichnet**, daß die Dichtfläche (33) des Dichtkörpers (31) gegenüber den Stirnseiten (34) der Führungsstege (19) vorsteht.

4. Restdruckventil nach Patentanspruch 1, **dadurch gekennzeichnet**, daß der kreisringförmige Dichtsitz (40) stirnseitig des Dichtsitzträgers (36) vorgesehen ist.

5. Restdruckventil nach einem der Patentansprüche 1 bis 4, **dadurch gekennzeichnet**, daß der umfangsseitig mit einer Ringdichtung (37) versehene Dichtsitzträger (36) in einen Dichtsitzabschnitt (35) des Querkanals (6) eingebettet und durch ein Tellerfederpaket (39) in Richtung auf den Dichtkörperträger (18) belastet ist.

6. Restdruckventil nach Patentanspruch 1, **dadurch gekennzeichnet**, daß der Boden der Distanzhülse (25) als von dieser lösbares Druckstück (22) ausgebildet ist.

7. Restdruckventil nach einem der Patentansprüche 1 bis 6, **dadurch gekennzeichnet**, daß der Dichtkörperträger (18) und der Boden (22) der Distanzhülse (25) mit einander zugewandten Zentrierungen (20, 23) für die Druckfeder (21) ausgerüstet sind.

8. Restdruckventil nach einem der Patentansprüche 1 bis 7, **dadurch gekennzeichnet**, daß der Dichtkörperträger (18) und die Distanzhülse (25) in eine Ventilpatrone (9) integriert sind, welche in das Ventilgehäuse (4) einschraubbar ist.

## Claims

1. A residual-pressure valve for a gas cylinder valve (1) associated with a compressed-gas container, the valve comprising a sealing member (31) secured on a sealing-member holder (18) and adapted to be pressed by a compression spring (21) against a resiliently braced sealing seat (40) constituting a component of a sealing-seat holder (36), the sealing member being centrally embedded in the end face of the sealing-member holder (18) facing the sealing seat (40) and the annular sealing-seat holder (36) being at the end face of the sealing-member holder (18), the sealing-member holder (18) and the sealing-seat holder (36) being axially movable together in stages in the transverse duct (6), at least for filling the compressed-gas container, characterised in that the sealing-member holder (18) is provided at the periphery with a number of longitudinally extending guide webs (19) sliding in a web portion (16) of the transverse duct (6), and the sealing-seat holder (36), via spacer fingers (27) which extend between the guide webs (19) peripherally of the sealing-member holder (18) and are disposed at a radial distance from the wall of the web portion (16), abuts a pot-shaped spacer sleeve (25) perforated at the bottom and surrounding the compression spring (21), the spacer sleeve (25) being incorporated so as to be axially slidable between the sealing-member holder (18) and the perforated (4) bottom (13) of a sleeve portion (15) of the transverse duct (6).

2. A residual-pressure valve according to claim 1, characterised in that the sealing member (31) is releasably secured, more particularly by a screw (32), in a recess (30) in the end face of the sealing-member holder (18).

3. A residual-pressure valve according to claim 1 or 2, characterised in that the sealing surface (33) of the sealing member (31) projects from the end faces (34) of the guide webs (19).

4. A residual-pressure valve according to claim 1, characterised in that the circular sealing seat (40) is provided at the end face of the sealing-seat holder (36).

5. A residual-pressure valve according to any of claims 1 to 4, characterised in that the sealing-seat holder (36) provided with a peripheral annular seal (37) is embedded in a sealing-seat portion (35) of the transverse duct (6) and is biased by a cup spring assembly (39) in the direction of the sealing-member holder (18).

6. A residual-pressure valve according to claim 1, characterised in that the bottom of the spacer sleeve (25) is in the form of a pressure member (22) releasable therefrom.

7. A residual-pressure valve according to any of claims 1 to 6, characterised in that the sealing-member holder (18) and the bottom (22) of the spacer sleeve (25) are equipped with facing means (20, 23) for centring the compression spring (21).

8. A residual-pressure valve according to any of claims 1 to 7, characterised in that the sealing-member holder (18) and the spacer sleeve (25) are incorporated in a valve cartridge (9) for screwing into the valve casing (4).

## Revendications

1. Vanne de pression résiduelle pour un robinet de bouteille à gaz (1) affectée à un réservoir de gaz sous pression, qui présente dans un canal transversal (6) du logement de vanne (4) un corps d'étanchéité (31) fixé sur un support de corps d'étanchéité (18), pouvant venir s'appliquer sous l'influence d'un ressort de compression (21) contre un siège d'étanchéité (40) supporté élastiquement en tant que composant d'un support de siège d'étanchéité (36), qui est encastré centralement dans le côté frontal dirigé vers le siège d'étanchéité (40) du support de corps d'étanchéité (18) et le support de siège d'étanchéité annulaire (36) se situe sur le côté frontal du support de corps d'étanchéité (18), le support de corps d'étanchéité (18) et le support de siège d'étanchéité (36) pouvant au moins être décalés axialement et conjointement par section pour le remplissage du réservoir de gaz sous pression dans le canal transversal (6), caractérisée en ce que le support de corps d'étanchéité (18) est muni sur la périphérie de plusieurs ailettes de guidage (19) coulissant longitudinalement, dans une section d'ailettes (16) du canal transversal (6), le support de siège d'étanchéité (36) s'appuyant sur des doigts d'espacement (27) disposés entre les ailettes de guidage (19) sur la périphérie du support de corps d'étanchéité (18) et à une distance radiale par rapport à la paroi de la section d'ailettes (16) sur une douille d'espacement (25) perforée dans le fond et renfermant sous forme de pot le ressort de compression (21), douille d'espacement qui est intégrée entre le support de corps d'étanchéité (18) et le fond (13) muni d'une ouverture (4) d'une section de douille (15) du canal transversal (6) avec possibilité de coulissement axial.

2. Vanne de pression résiduelle selon la revendication 1, caractérisée en ce que le corps d'étanchéité (31) est fixé de façon amovible, en particulier au moyen d'une vis (32), dans une dépression (30) frontale du support de corps d'étanchéité (18).

3. Vanne de pression résiduelle selon la revendication 1 ou 2, caractérisée en ce que la face d'étanchéité (33) du corps d'étanchéité (31) fait saillie par rapport aux côtés frontaux (34) des ailettes de guidage (19).

4. Vanne de pression résiduelle selon la revendication 1, caractérisée en ce que le siège d'étanchéité annulaire (40) est prévu frontalement par rapport au support de siège d'étanchéité (36).

5. Vanne de pression résiduelle selon l'une des revendications 1 à 4, caractérisée en ce que le support de siège d'étanchéité (36) muni périphériquement d'une étanchéité annulaire (37) est encastré dans une section de siège d'étanchéité (35) du canal transversal (6) et se trouve sollicité par un ensemble de ressort à disque (39) dans la direction du support de corps d'étanchéité (18).

6. Vanne de pression résiduelle selon la revendication 1, caractérisée en ce que le fond de la gaine d'espacement (25) est conçu sous forme d'élément de compression (22) amovible.

7. Vanne de pression résiduelle selon l'une des revendications 1 à 6, caractérisée en ce que le support de corps d'étanchéité (18) et le fond (22) de la gaine d'espacement (25) sont munis de centrages (20, 23) en regard l'un de l'autre pour le ressort de compression (21).

8. Vanne de pression résiduelle selon l'une des revendications 1 à 7, caractérisée en ce que le support de corps d'étanchéité (18) et la douille d'espacement (25) sont intégrés dans une cartouche de vanne (9) qui se visse dans le logement de vanne (4).
